(19) Europäisches Patentamt

European Patent Office

Office européen des brevets

(11) **EP 0 985 988 A1**

(12) **EUROPEAN PATENT APPLICATION**

(43) Date of publication:
**15.03.2000 Bulletin 2000/11**

(51) Int. Cl.$^7$: **G05B 13/02**

(21) Application number: **98870192.6**

(22) Date of filing: **11.09.1998**

| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Ruan, Da**<br>  **2400 Mol (BE)**<br>• **Li, Xiaozhong**<br>  **2400 Mol (BE)** |
| --- | --- |
| (71) Applicant: **SCK.CEN**<br>**1160 Brussels (BE)** | (74) Representative:<br>**Bird, William Edward et al**<br>**Bird Goen & Co.,**<br>**Termerestraat 1**<br>**3020 Winksele (BE)** |

(54) **An adaptive fuzzy controller and simulation method**

(57) An adaptive fuzzy controller for use with a controlled system and for controlling a first object of the controlled system in accordance with a system control parameter is described; whereby the fuzzy controller comprises:

a fuzzy rule base (105) including control rules for performing a fuzzy inference operation; and an adaptive unit for adaptively changing a parameter relating to one of the control rules of the fuzzy controller in accordance with a multi-dimensional performance table having at least three dimensions, the inputs for the table being an error in the system control parameter, the rate of the change of the error in the system control parameter and a value related to a state of the controlled system or a value related to a state of an object in the controlled system.

Also methods of operating the controller are described, in particular its use in a control system for a nuclear reactor. A simulator is described for testing the controller.

Fig. 1

Printed by Xerox (UK) Business Services
2.16.7/3.6

**Description**

The present invention relates to a controller and a method of operating a controller suitable for safety critical applications such as a nuclear reactor, particularly when the controlled system is relatively well characterised. The present invention also includes a control system including a group of controllers. The present invention also relates to a simulation model which may be used to check the performance of controllers for safety critical applications, especially nuclear reactors.

TECHNICAL BACKGROUND

Fuzzy control rules are the core of a fuzzy controller although the membership functions and scale factors are also important with respect to the effect of the fuzzy logic controller. With the help of the knowledge of operators, a fuzzy controller is able to work well. A fuzzy controller with fixed fuzzy control rules is not adaptive. Such a fuzzy controller may not work well if the environmental conditions are changed or some fuzzy control rules are not well selected. In an attempt to solve these problems, Procyk and Mamdani proposed a self-organising process controller in the 1970's in which the fuzzy control rules could be self-adjusted based on a performance measurement. In Procyk and Mamdani's work, a performance measurement table was designed to assess the quality of the fuzzy control rules. However, a good performance measurement table is difficult to obtain, and its suitability may depend on the specific system. Other known fuzzy controllers adjust membership functions and/or scale factors to provide adaptive functions.

Generally, fuzzy adaptive control includes three aspects: (1) regulated scale factors; (2) regulated fuzzy control rules; (3) both regulated scale factors and rules. As for (3), it is not used widely as it is difficult to modify scale factors and control rules simultaneously with good and stable results. As for (1), it can indeed improve quality of fuzzy control, however, it is not optimal.

Normally, the methods of getting rules for fuzzy controllers can be broadly divided into two types, sourceable and non-sourceable. In the sourceable method the rules are obtained from some information source, such as human experience or historical input-output data. This type of experience is widely used by fuzzy controller designers. The problems of using a data base of experience are that it is time-consuming and subjective to some degree. In order to overcome these problems, particularly avoiding the subjectivity, historical input-output data may be used. In order to obtain rules from those data, many methods are used, of which one example is neural networks (NN). One problem with the sourceable method is that it depends strictly on the quality of the source which will be transformed into rules. In case the source is noisy, i.e. contains erroneous information, then the rules will be noisy too. Another problem with the sourceable method is that it is usually non-adaptive, i.e. all the rules are fixed, therefore it cannot perform well in a dynamically varying environment.

Non-sourceable methods are source-free and they produce and choose rules according to a performance measurement of the controller, such as genetic algorithms (GA) which mostly also generate membership functions and scale factors or self-organising controllers (SOC). GA's can find integratedly optimal parameters but the method is computationally costly, and, furthermore, it is almost impossible apply it in a real complex system without a simulation model. The SOC is the only method which has the following advantages: objective, adaptive, less computationally expensive, more error tolerant, and simple. The general principle of the SOC is that the controller monitors its own performance and adjusts its control rules to improve performance for time-varying and unknown systems or events. The problem with SOC is how to do the performance measurement. One known method is to design a performance measurement table which looks a little like a fuzzy control rule table and to use it to assess the performance of the controller (rules). The table is used to regulate (modify) the fuzzy control rules. But in practice setting up such a performance measure table is hardly easier than setting up a good fuzzy-control-rule-table. Hence, the design of such a performance measurement table may be very difficult and it is often system-dependent.

Fuzzy adaptive control (FAC), sometimes called self-organizing fuzzy control, uses an intelligent algorithm which is able to self-regulate fuzzy control rules in a real-time control process. Although usually a fuzzy controller without an adaptive function may sometimes work very well, an adaptive function is considered to be a requirement as an advanced aid in some systems with too many uncertainties so that the rules cannot be determined accurately at the design stage. On the other hand an adaptive fuzzy controller has a potential for erratic or erroneous behaviour when confronted with certain unexpected aspects of the system or with certain unusual situations. Fuzzy logic is conventionally the main part of a fuzzy controller and the fuzzy controller usually has a plurality of inputs, e.g. two inputs and two outputs. Conventionally such a fuzzy controller replaces a classical controller, e.g. a PID controller. A fuzzy controller may be good for a complex system with many uncertain conditions, but it is perhaps not so good for a complex system with many certain conditions, where an analytic controller (non-fuzzy) works very well. Fuzzy logic has been applied successfully to some ill-defined industrial processes, but its value in the operation of well-characterised systems has not yet been demonstrated clearly. For example, a fuzzy rule-based approach has not yet achieved general acceptance in a nuclear reactor control. One reason is the high level of safety requirements in safety critical systems. A safe design of a fuzzy controller for safety critical systems such as a nuclear reactor with very high safety requirements is considered technically very difficult. Such a controller preferably has inherent safety features, however, it is practically impossible to predict all possible accidents and unusual situations. Thus, a controller which is too rigidly designed, even with respect to its adaptive function, may fail in unusual situations. The performance of any controller which is used in safety critical systems is preferably determinable within safe limits. Organisations entrusted with approving the use of such controllers must be able to satisfy themselves that the controller will behave well and properly. One problem with genetic algorithms and neural networks is that their operation can be so complex that it is difficult to for a supervising organisation to rule out the possibility that some state of the controller exists whose behaviour may be sufficiently sub-optimal that dangerous conditions may develop.

US 5,655,056 describes a fuzzy controller group control system in which a plurality of fuzzy controllers are interconnected by a communication line and the parameters of rules and membership functions of each fuzzy controller are capable of being adaptively changed depending upon the state of the controlled system so as to improve the control performance of the overall system. This known system only modifies fuzzy rules based on the observed difference between actual and desired values of a control parameter. The fuzzy rule modification algorithm is very simple and only allows a single step modification. Changes in load are usually much larger than load disturbances so that the known controllers must always adapt their rules to steady state load disturbances or a large change in set load. This takes time and it is difficult to design a controller which works well with both types of system.

SUMMARY OF THE PRESENT INVENTION

The present system includes a fuzzy controlled system comprising: a controlled system; a sensor for sensing a state of the controlled system; at least one fuzzy controller having control rules for performing a fuzzy inference operation, the fuzzy controller controlling a first object of the controlled system in accordance with a system control parameter; and an adaptive unit for adaptively changing a parameter relating to one of the control rules of the at least one fuzzy controller in accordance with a multi-dimensional performance table having at least three dimensions, the inputs for the table being an error in the system control parameter, the rate of the change of the error in the system control parameter and a value related to a state of the controlled system or a value related to a state of an object in the controlled system.

The present invention also includes a method of controlling a system including at least one fuzzy controller having control rules for performing a fuzzy inference operation, the at least one fuzzy controller controlling a first object of the controlled system in accordance with a sensed system state of the controlled system, comprising the steps of: adaptively changing a parameter relating to one of the fuzzy rules of the at least one fuzzy controller in accordance with a multi-dimensional performance table having at least three dimensions, the inputs for the table being an error value for the sensed system state, a rate of change of this error and a value related to a state of the controlled system or a value related to a state of an object in the controlled system.

The present system includes a fuzzy controlled system comprising:

a controlled system; a sensor for sensing a state of the controlled system; at least one fuzzy controller having control rules for performing a fuzzy inference operation, the fuzzy controller controlling a first object of the controlled system; and an adaptive unit for adaptively changing a parameter relating to one of the control rules of the at least one fuzzy controller, the adaptive unit being adapted to change the parameter relating to one of the control rules in a current time period in accordance with a value relating to the current output value of the sensor and a value relating to the output value of the sensor in a previous time period.

The present invention also includes a method of controlling a system including at least one fuzzy controller having control rules for performing a fuzzy inference operation, the at least one fuzzy controller controlling a first object of the controlled system in accordance with a sensed system state of the controlled system, comprising the steps of: adaptively changing a parameter relating to one of the fuzzy rules of the at least one fuzzy controller in a current time period in accordance with a current value relating to a sensed system state and a value relating to a sensed system state in a previous time period.

The present invention also includes a control system for a group of controllers comprising:

at least one fuzzy controller having control rules for performing a fuzzy inference operation, said fuzzy controller controlling a first object of a system to be controlled in accordance with a control parameter of the controlled system;

at least one analytic controller for controlling the first object of the controlled system; a control means for controlling which of the at least one analytic and the at least one fuzzy controllers actively controls the controlled system; and an adaptive unit for adaptively changing a parameter relating to one of the fuzzy rules of the at least one fuzzy controller in response to changes in the control parameter.

The present invention also includes a method of operating a group of controllers at least one fuzzy controller having control rules for performing a fuzzy inference operation, said fuzzy controller controlling a first object of a system to be controlled in accordance with a control parameter and at least one analytic controller for controlling the first object of the controlled system; the method comprising the following steps:

controlling which of the at least one analytic and the at least one fuzzy controllers actively controls the controlled system; and

adaptively changing a parameter relating to one of the fuzzy rules of the at least one fuzzy controller in response to changes in the control parameter when the fuzzy controller is actively controlling the controlled system.

The present invention also includes a simulation system for well characterised safety critical systems comprising a first hollow vessel, a second hollow vessel and a third hollow vessel; a supply of liquid to each of the second and third hollow vessels; an output for the liquid from each of the second and third vessels to the first vessel; a liquid outlet from the first vessel;

a first controllable valve for controlling the flow of liquid from the second to the first vessel; and a second controllable valve for controlling the flow of liquid from the third to the first vessel.

The present invention also includes a system for controlling a safety critical system, the safety critical system having two automatic control devices, comprising a safety lock, the safety lock allowing the system to be controlled by only one of the automatic controllers at any one time.

In accordance with one embodiment of the present invention, a rule-based multi-controller system (RBMCS) is proposed which combines one analytic controller and one or more fuzzy logic controllers, in which the analytic controller has a dual duty, that is, it operates as a controller in some crisp conditions and it also plays a role of co-ordinator among all the controllers. A fuzzy adaptive control algorithm is incorporated in the RBMCS method.

In accordance with another embodiment of the present invention a set of new performance rules for modification of the controller's fuzzy rule base is proposed which can replace the former conventional performance measurement. The new rules are system-independent, therefore it can be applied in most fuzzy controllers, for instance in nuclear reactor control. As an additional security, and before it is applied in an operational reactor, the fuzzy control system in accordance with the present invention has been tested on trial systems, e.g. an inverted pendulum simulation system, a beating temperature control system, and a water level control system. The experimental results show the adaptive function with the new performance rules is very effective in steady-state. It makes a normal fuzzy controller more robust and more stable. The adaptive function with the new performance rules may be adopted in most fuzzy controllers which need high precision in the steady-state and lower cost.

The present invention will now be described with reference to the following figures.

BRIEF DESCRIPTION OF THE FIGURES

Fig. 1 is a schematic representation of an adaptive fuzzy controller for use with the present invention.
Fig. 2A is a schematic representation of the core of a nuclear reactor.
Fig. 2B is a schematic representation of a simulator in accordance with one embodiment of the present invention.
Fig. 3 is a schematic representation of a fuzzy control system in accordance with one embodiment of the present invention.
Figs. 4 and 5 show a general control profile for a system variable.
Fig. 6 shows the results of an adaptive fuzzy controller in accordance with an embodiment of the present invention compared with an adaptive controller without adaptive functionality.
Fig. 7 shows the results of an adaptive fuzzy controller in accordance with an embodiment of the present invention compared with an adaptive controller without adaptive functionality but with good rule base.
Fig. 8 is the performance trace of a conventional PID controller.
Fig. 9 is a schematic representation of a fuzzy controller system in accordance with one embodiment of the present invention.
Fig. 10 is a schematic representation of a fuzzy controller in accordance with one embodiment of the present invention
Fig. 11 is a schematic representation of a nuclear reactor control system including a fuzzy controller system in accordance with one embodiment of the present invention.

DESCRIPTION OF THE ILLUSTRATIVE EMBODIMENTS

The present invention will mainly be described with reference to control systems for nuclear reactors and simulation systems therefore, but the present invention is not limeted thereto but only by the claims.

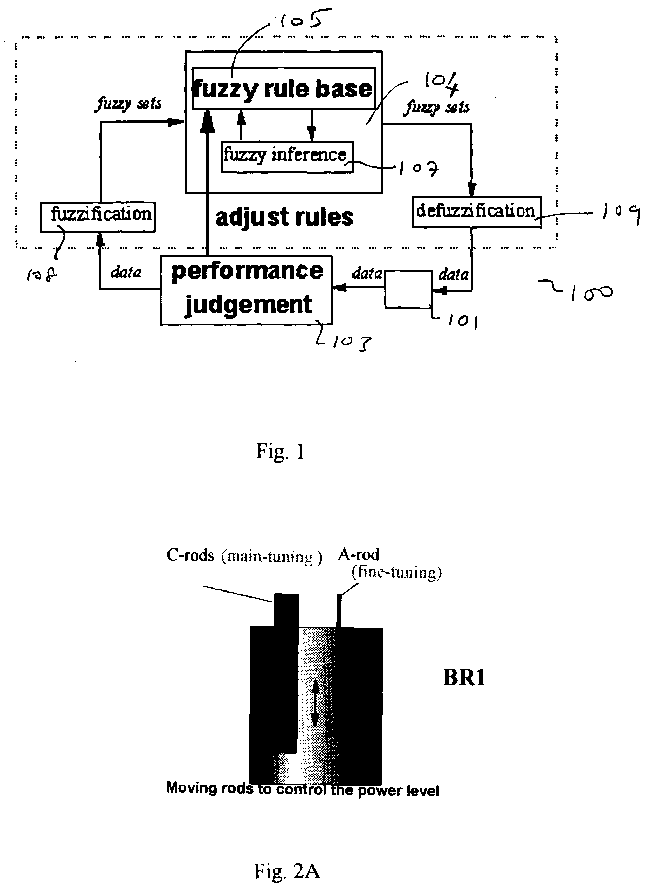

Fig. 1 is a schematic diagram showing an adaptive fuzzy controller as used in the present invention. A state (or states) of a system 101 to be controlled is output as a performance parameter to a performance judgement unit 103. Based on the observed performance, fuzzy rules in the fuzzy rule base 105 in a fuzzy controller 104 are modified. The effect of these changes is to change the output of the fuzzy inference unit 107, ideally to drive the system 101 closer to a desired performance. As is well known to the skilled person, the input variables of controller 104 are fuzzified (107) and the outputs are defuzzified (109). It is not expected that fuzzification or defuzzification presents limits to the present invention and details of these operations will not be described. In addition the skilled person is aware of the use of scaling factors and membership functions in the controller 100. It is not expected that scale factors or membership functions present limits to the present invention and these will not be described in detail. At the beginning of each cycle, the system's currently sensed behaviour is judged in the performance judgement unit 103 and the rule base 105 is changed if this is necessary. Conventionally, this judgement is carried out in accordance with a performance table whose inputs are the error E (the difference between the actual value and the desired value) and CE which is the rate of change of the error. Using E and CE as inputs, the value in the performance tabled is looked up and the relevant fuzzy rule changed accordingly. In the next cycle, the controller 104 uses the new rule base for determining the control of the system 101, whose behaviour is again judged in this cycle and the above procedure is repeated. Such a control system is known from the book by Witold Pedrycz, "Fuzzy Control and Fuzzy Systems", John Wiley & Sons, 1993.

Fig. 2A is a schematic representation of a graphite-moderated and air-cooled nuclear reactor BR1 fuelled with natural uranium metal. The power generated by the reactor BR1 is controlled by two kinds of control rods, called A-rods and C-rods respectively. Moving the control rods in and out can change the neutron absorption in the core of reactor BR1, therefore changing the output power. The A-rods are for fine tuning, and C-rods are for main or coarse tuning. Suppose a power increase of a nuclear reactor is desired, a conventional control strategy would be:

1. Put A-rods at the middle position, and withdraw C-rods, thereby inserting positive reactivity. Having waited for a time period, the operator then allows the power to rise.
2. Once the power level approaches the desired value, either
2A. reinsert C-rods gradually; or
2B. stop C-rods but move in A-rods,
thereby levelling off the power without overshoot.
3. Whenever A-rods reach one of their limit positions, move A-rods back to the middle position and meanwhile move C-rods the appropriate distance to maintain the power.

The first control step and the third control step are more closely related to analytic crisp rules, because the middle position and the limit positions can be clearly defined and determined. Generally, when a safety-critical system is far from its desired value an analytic controller behaves adequately to PTO. In accordance with one embodiment of the present invention, when the control parameter is close to the desired value, fuzzy control is used. For instance, the closer the reactor power is to the desired value, the smaller the movement of the control rods, the less the risk of erratic behaviour by the controller and the more adaptive the controller should be. In a controller in accordance with one embodiment of the present invention, good analytic crisp rules are used when the actual value of the control parameter (in a nuclear reactor: power) is well away from the desired value and fuzzy logic is applied to those uncertain rules when the actual value approaches the desired value. Such a controller will be called a rule-based multi-controller system (RBMCS) in accordance with the present invention.

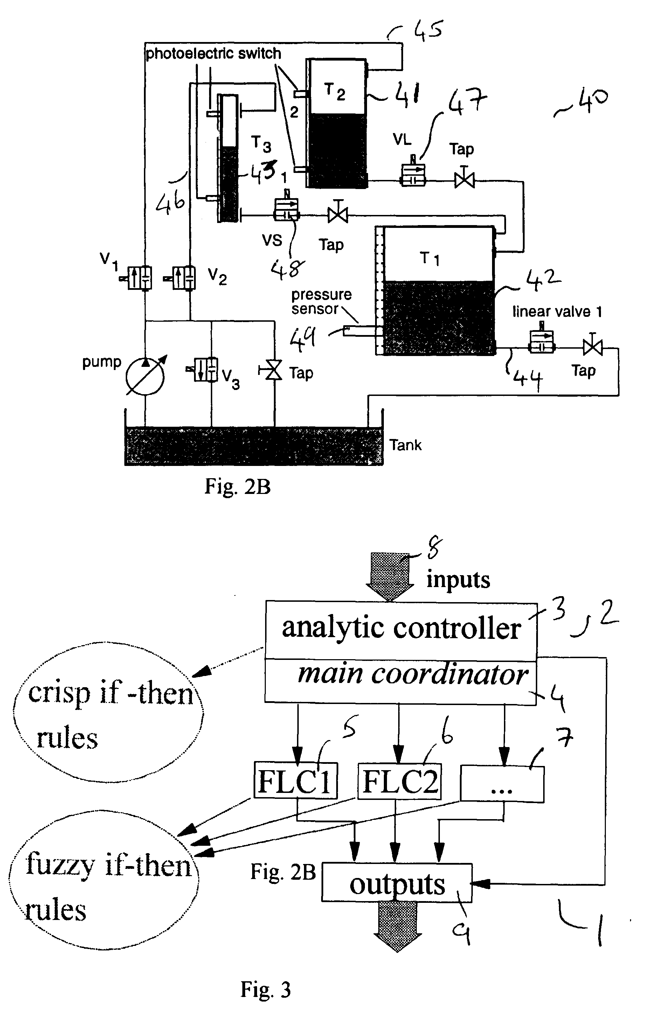

An RBMCS 1 in accordance with one embodiment of the present invention is shown schematically in Fig. 3, and is configured as a plurality of controllers 3; 5-7 organised in a hierarchical manner. A high level conventional analytic control means 2 is the main coordinator of other lower level controllers 3; 5-7. The analytic control means 2 includes a controller organiser 4 and an analytic controller 3. The analytic control means 2 has two tasks: it firstly includes the analytic controller 3 operating according to some crisp condition rules and secondly distributes the control tasks between the fuzzy controllers 5-7 and the analytic controller 3, however the present invention is not limited thereto. For instance the first and second functions of the analytic control means 2 may be independent of each other and may be embodied in separate electronic devices. Each fuzzy controller 5-7 preferably controls one object, e.g. a control rod in a nuclear reactor. The controller organiser 4 decides when and which of the fuzzy controllers 5-7 and the analytic controller 3 starts to work or stops working.

In accordance with one embodiment of the present invention a simulation system 40 is provided (Fig. 2B) which mimics the control process of a nuclear reactor and can be used to assess the performance of any type of controller for nuclear reactors, in particular experimental fuzzy controllers and more generally can be used to assess the performance of controllers for safety critical systems. In this simulation model 40 the water level in a main tower 42 is controlled by adjusting two valves 47, 48 (VL and VS) which control the flow from two smaller towers 41, 43, respectively. The main tower 42 has an outflow 44 at the bottom as well as two inflows from the two smaller towers 41, 43, therefore the water level changes as a dynamic system. The smaller towers 41, 43 are filled with sources of water 45, 46. Ideally the difference in throughput of the two linear valves VL and VS should such that VL is a main-tuning valve and VS a fine-tuning valve so that VL can be used to keep the balance of the water level while VS is going back to the middle position because it has arrived at a limit position. The linear valves VL and VS should preferably have an instant stop function.

Generally the system to be controlled has a desired value, e.g. water level in tower 42 measured by a pressure sensor 49. Let $E$ and $CE$ represent error (= *actual value -desired value*) and the rate of change of the error, respectively. Let $E(t)$ and $CE(t)$ represent error at time $t$ and the rate of change of the error at time $t$, respectively. These are the two inputs of the fuzzy controllers 5-7. Let $f$ be the output of any controller 3, 5-7, in particular the fuzzy controllers 5-7 and assume the total number of the fuzzy rules is $n$, then every fuzzy rule has the following form,

if $E$ is Ai and $CE$ is Bi, then $f$ is Ci,

where i = 1,2, ..., n; Ai, Bi, and Ci are fuzzy linguistic values; and i is an index pointing out each rule's position in the rule table (or the rule data file). The function r[i] represents the fuzzy control magnitude (conclusion fuzzy set) of the i-th rule, and simply let

r[i] = 1,2,3,4,5,6,7

where 1 = NL (negative large), 2 = NM (negative middle), 3 = NS (negative small), 4 = ZE (zero), 5 = PS (positive small), 6= PM (positive middle), 7 = PL (positive large).

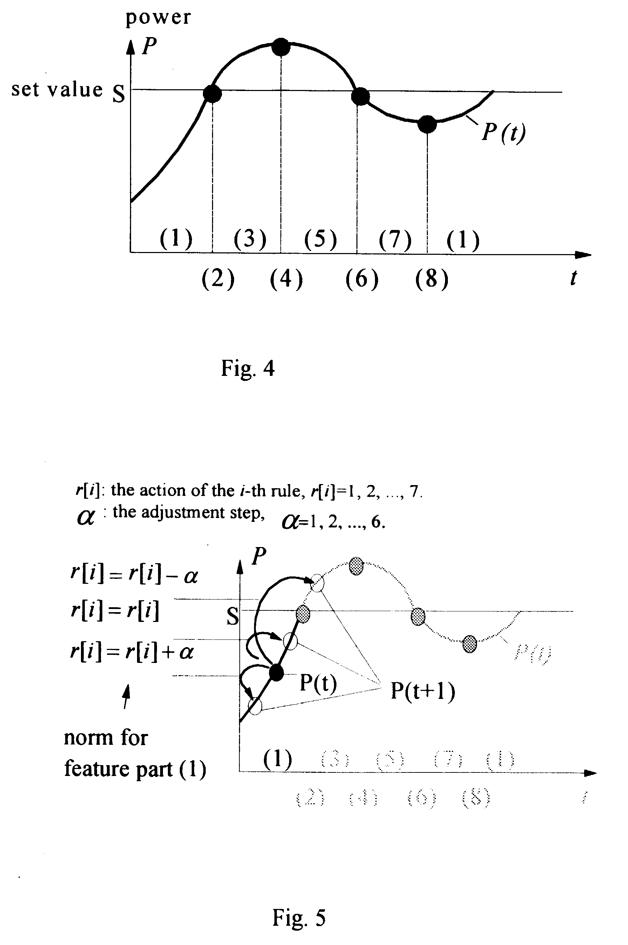

In general, a control trajectory may be expressed as shown schematically in Fig. 4, and it can be regarded as having up to four feature sections and four feature points. For each feature section or point, a norm is provided in accordance with the present invention of how to regulate (modify) the fuzzy control rules to guide the control of the system. For example, if the current water level $P(t)$ of the simulation 40 is in the feature section (1) (see Fig. 5), then after the relevant fuzzy controller 5-7 has used the current control rules to determine the operation for the next period of time, the water level $P(t+1)$ at the next time period is measured by the sensor 49 and can have three possibilities 2', 2" or 2''',

2' = $P(t+1)<S$ and $P(t+1)≤P(t)$;
2" = $P(t)<P(t+1)≤S$;
2''' =$P(t+1)>S$.

where $S$ is the desired value of the control parameter. The related norm to guide how the fuzzy rules should be changed is:

(i) if $E(t+1)<0$ and $CE(t+1)≤0$, that is, $P(t+1)<S$ and $P(t+1)≤P(t)$, then r[i]=r[i]+α;
(ii) if $E(t+1)≤0$ and $CE(t+1)>0$, that is, $P(t)<P(t+1)≤S$, then r[i]=r[i];
(iii) if $E(t+1)>0$, that is, $P(t+1)>S$, then r[i]=r[i]-α;

where α is the rule modification step size and α is an integer such as 1, 2, 3, 4, 5, 6. In case (i), the fuzzy controller 5-7 brings the water level $P(t+1)$ further away from the set value $S$, therefore the behaviour of the fuzzy controller is not good, the degree of control is too low and corresponding rules should be strengthened. In case (ii), the fuzzy controller 5-7 brings the water level $P(t+1)$ closer to the set value $S$, therefore the behaviour of the fuzzy controller 5-7 is good, no rules should be changed. In case (iii), the fuzzy controller 5-7 makes the water level $P(t+1)$ overshoot the set value $S$, therefore the behaviour of the fuzzy controller 5-7 is not good, the degree of control is too high and corresponding rules should be weakened. Once the present invention is understood, the skilled person will appreciate that it may be implemented in several ways, e.g. the above change algorithms may be included as a software program running on a computer, alternatively, performance tables may be used. In accordance with one aspect of the present invention the change of the fuzzy rules depends not only on values determined from a performance determined by current values of $E$ and $CE$, but also on the value of $E$ from a previous cycle. In the case that performance tables are used, the values in the performance table change in dependence upon a previous value of the system state, that is a previous value of $E$ or the relationship between a previous value of $E$ and its current value determine the value in the performance table. Thus, in accordance with one aspect of the present invention the values derived from the performance judgement unit 103 of Fig. 1 which are used to modify the fuzzy rule base 105 are not determined solely from *E* and *CE* as in a conventional performance table but also from historical values of *E* and the relationship (e.g. larger or smaller) of this historical value to the current value.

As shown in Fig. 4 a control locus may be partitioned into 4 segments and 4 points and the following norms used for the following eight different cases (the case numbers 1-8 are shown on Fig. 4). These rules are used for determining the performance modifications carried out to modify the fuzzy rules of a fuzzy controller according to an embodiment of the present invention.

Case (1) $E(t) < 0$ and $CE(t) > 0$

(i) $E(t+1) < 0$

if $CE(t+1)) > 0$, then $r[i] = r[i]$,
else $r[i] = \min(r[i] + 1 \times \alpha, 7)$, which means the lowest value of $r[i] + 1 \times \alpha$ and 7 (i.e. cannot be higher than 7)

(ii) $E(t+1) = 0$

if $CE(t+1)) > 0$, then $r[i] = \max(r[i] - 1 \times \alpha, 1)$, which means the highest value of $r[i] - 1 \times \alpha$ and 1, (i.e. cannot be lower than 1)
if $CE(t+1)) = 0$, then $r[i] = r[i]$,
if $CE(t+1)) < 0$ , then $r[i] = \min(r[i] + 1 \times \alpha, 7)$.

(iii) $E(t+1) > 0$

if $CE(t+1)) \geq 0$, then $r[i] = \max(r[i] - 1 \times \alpha, 1)$,
if $CE(t+1)) < 0$, then $r[i] = r[i]$.

Case (2) $E(t) > 0$ and $CE(t) > 0$

(i) $E(t+1) > 0$

if $CE(t+1)) > 0$ , then $r[i] = \max(r[i] - 1 \times \alpha, 1)$,
else $r[i] = r[i]$.

(ii) $E(t+1) = 0$

if $CE(t+1)) \geq 0$, then $r[i] = r[i]$
if $CE(t+1)) < 0$ , then $r[i] = \min(r[i] + 1 \times \alpha, 7)$.

(iii) $E(t+1) < 0$

if $CE(t+1)) \leq 0$, then $r[i] = \min(r[i] + 1 \times \alpha, 7)$,
if $CE(t+1)) > 0$, then $r[i] = r[i]$.

Case (3) $E(t) > 0$ and $CE(t) < 0$

(i) $E(t+1) > 0$

if $CE(t+1)) < 0$, then $r[i] = r[i]$,
else $r[i] = \min(r[i] + 1 \times \alpha, 7)$.

(ii) $E(t+1) = 0$

if $CE(t+1) < 0$, then $r[i] = \max(r[i] - 1 \times \alpha, 1)$,
if $CE(t+1)) = 0$, then $r[i] = r[i]$,
if $CE(t+1)) > 0$, then $r[i] = \min(r[i] + 1 \times \alpha, 7)$.

(iii) $E(t+1)<0$

    if $CE(t+1))\leq 0$ , then $r[i]=\max(r[i]-1\times\alpha, 1)$,
    if $CE(t+1))>0$, then $r[i]=r[i]$.

Case (4) $E(t) <0$ and $CE(t) <0$

    (i) $E(t+1) >0$

        if $CE(t+1))\geq0$, then $r[i]= \max(r[i]-1\times\alpha, 1)$,
        else $r[i]=r[i]$.

    (ii) $E(t+1) =0$

        if $CE(t+1))\leq0$, then $r[i]=r[i]$,
        if $CE(t+1))>0$, then $r[i]=\max(r[i]+1\times\alpha,1)$.

    (iii) $E(t+1) <0$

        if $CE(t+1))<0$, then $r[i]=\min(r[i]+1\times\alpha,7)$,
        if $CE(t+1))\geq0$ , then $r[i]=r[i]$.

Case (5) $E(t)=0$ and $CE(t) >0$

    (i) $E(t+1) >0$

        if $CE(t+1))\geq0$, then $r[i]=\max(r[i]-1\times\alpha, 1)$,
        else $r[i]=r[i]$.

    (ii) $E(t+1) =0$

        if $CE(t+1))>0$, then $r[i]=\max(r[i]-1\times\alpha, 1)$,
        if $CE(t+1))=0$, then $r[i]=r[i]$,
        if $CE(t+1))<0$, then $r[i]=\min(r[i]+1\times\alpha,7)$,

    (iii) $E(t+1) <0$

        if $CE(t+1))\leq 0$, then $r[i]=\min(r[i]+1\times\alpha,7)$,

        if $CE(t+1))>0$, then $r[i]=r[i]$.

Case (6) $E(t) >0$ and $CE(t)=0$

    Similar to case (5).

Case (7) $E(t) =0$ and $CE(t) <0$

    (i) $E(t+1) >0$

        if $CE(t+1))\geq0$, then $r[i]=\max(r[i]-1\times\alpha, 1)$,
        else $r[i]=r[i]$.

    (ii) $E(t+1) =0$

        if $CE(t+1))>0$, then $r[i]=\max(r[i]-1\times\alpha, 1)$,
        if $CE(t+1))=0$, then $r[i]=r[i]$ ,
        if $CE(t+1))<0$, then $r[i]=\min(r[i]+1\times\alpha,7)$.

(iii) $E(t+1) < 0$

if $CE(t+1)) < 0$, then $r[i] = \min(r[i] + 1 \times \alpha, 7)$,
if $CE(t+1)) \geq 0$, then $r[i] = r[i]$.

Case (8) $E(t) < 0$ and $CE(t) = 0$

Similar to case (1).

where $\alpha$ is the coefficient of fuzzy rule modification step size, $\alpha \in N$ (natural number) and is typically, $1 \leq \alpha \leq 7$ and $r[i]$ represents the fuzzy control magnitude (conclusion fuzzy set) of the $i$-th rule in the rule table and is defined above. A comparison of case 1 (ii) and case 2 (ii) shows that although in both cases $E(t) = 0$ and $CE(t) > 0$ and therefore the modification rule would be the same in both cases for a conventional performance table, the modification rules in accordance with the present invention are different. The difference between the modification rules of case 1 (ii) and case 2 (ii) stems from the fact that in the two cases the previous value of $E$ is different. Thus, in accordance with one aspect of the present invention the modification rule generated by the performance judgement unit takes into account not only current values but also the value of a previous system performance value. The advantage of the performance measures in accordance with the present invention is that they can be used generally. Conventional performance measure tables are not generic, because they are system dependent and different for different objects.

The skilled person will realise that although the above algorithm makes use of three states for each variable, e.g. $E$ is negative, zero or positive, the above algorithm may be extended to a larger number of states by using membership functions for the values of each variable, such as large positive, medium positive, small positive, zero, small negative, etc. One way to describe the present invention is that the modifications of the fuzzy rule base 105 of Fig. 1 is carried out in accordance with a multi-dimensional performance table, with dimensions of 3 or more. Two of the axes of the performance table in accordance with the present invention are the error $E$ and the change of error with time $CE$. At least one further dimension of the table has an axis defined by a value related to a state of the system or an object of the system, in this embodiment it is the error $E$ at the previous cycle. This means that the multi-dimensional performance table has inputs of $E$, $CE$, and one further variable related to a state of the system or a state of an object in the system. Hence, a rule in the multi-dimensional performance table in accordance with an embodiment of the present invention to modify a rule in the fuzzy rule base may be in the form:

if $E$ is Ai and $CE$ is Bi, and the third variable is $C_i$ then the output of the table is $D_i$, where i = 1,2, ..., n; Ai, Bi, Ci, and $D_i$ are fuzzy linguistic values; and i is an index pointing out each rule's position in the rule table (or the rule data file).

The present invention is not limited to the third axis of the multi-dimensional performance table being related to historical values of a system parameter. In a further embodiment of the present invention, the third axis is the actual value of the position of a controlled object of the controlled system. For instance, in the control of a nuclear reactor the rod position may be used as an input variable of the multi-dimensional performance table. This means that the value is selected from the performance table depending on the three variables $E$, $CE$, and the value relating to the position of the respective C or A rod. This allows the rule modification algorithm to be dependent on the position of the controlled rod as well as on the conventional error and change of error parameters. This can allow for non-linearities in the system, e.g. that the degree of change of the fuzzy rule base may be reduced or limited when the rods are in extreme positions or when large non-linear behaviours are expected which may cause significant performance disturbance. This embodiment may be combined with the previous embodiment to produce a further embodiment of the present invention in which the performance table is four dimensional whose inputs are $E$, $CE$, the value relating to the position of the respective C or A rod, and a historical value of $E$. Reference to multi-dimensional performance tables relates in accordance with the present invention to the broadest conceptual description of the present invention and not necessarily to an implementation of the present invention using multi-dimensional look-up tables. Hence, "performance table" means a function for providing a value for the modification of the fuzzy rule base based on three or more inputs implemented by whatever means.

Preferably not all fuzzy rules should be regulated (modified) simultaneously as this may lead to over-regulation and instability. Hence, it is preferred in accordance with the present invention if only some of the fuzzy rules are regulated, for example, those that were activated in the last cycle. The following formula describes which should be preferably adjusted:

$$A_i(E) \wedge B_i(CE) = \bigvee_{c_j = c_i} A_j(E) \wedge B_j(CE)$$

which means that the i-th rule is preferably changed only if it is the largest amongst those activated rules which have the same conclusion part. For example, (NL, NM: PL) and (NM, NM: PL) are two activated rules and have the same conclusion part, i.e., PL. Comparing NL($E$) $\wedge$ NM($CE$) with NM($E$) $\wedge$ NM($CE$), the bigger one corresponds to the rule which should be adjusted.

A fuzzy controller system 1 according to the present invention may be constructed using standard components such as A/D and D/A converters, PLC, etc. which may be obtained from the Omron Corporation, Japan, for instance. The PLC may be connected to a personal computer (PC) including a processor such as a Pentium™. The main program may be written in a high level language such as the C language. In the simulation model 40 of Fig. 2B one main analytic controller 3 and two fuzzy controllers FLC1 and FLC2 are used as described with reference to Fig. 3, the valves VL and VS being separately controlled by the two fuzzy controllers FLC1 and FLC2, respectively. Fuzzy controller FLC1 controls valve VL and simulates the control of the C-rods in a nuclear reactor, fuzzy controller FLC2 controls valve VS and simulates the control of the A-rods, and the analytic controller means 2 is the main co-ordinator. The adaptive function is programmed as a module and can be switched on/off on-line by a function key. Each fuzzy controller FLC1 and FLC2 has two inputs $CE$ and $E$ and one output $f$. Membership functions may have, for instance, conventional triangular shapes. Each fuzzy controller has 49 rules. An example of such a rule is, "if the $E$ is NL and $CE$ is NM, then VL is PL". Large overshoots are preferably avoided, so all rules are initialised as safely as possible, e.g. with NL as conclusion parts. In the simulation model 40 the desired water level in the main tower 42 is 20 cm (the $S$ value) and the water level starts from 0 cm.

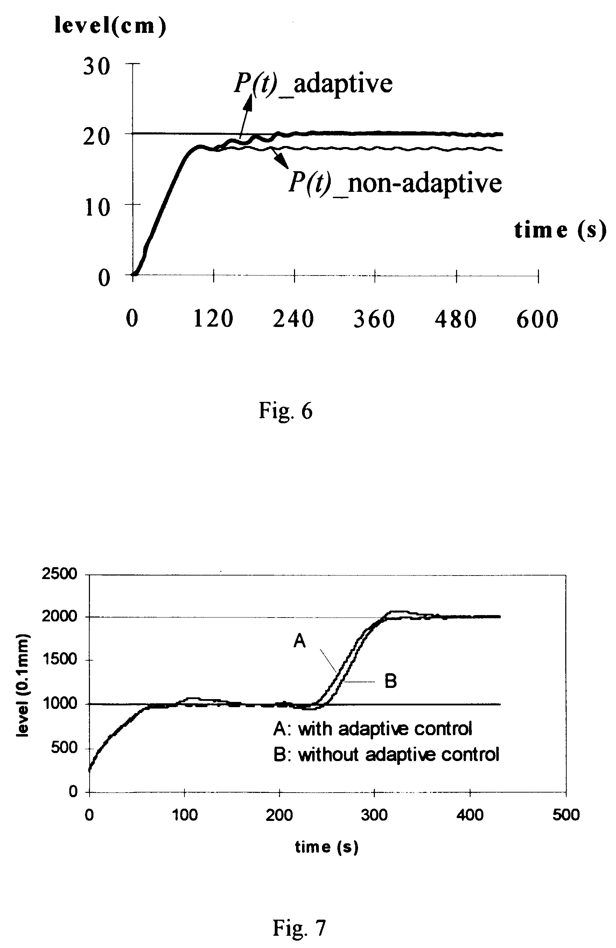

In accordance with one embodiment of the present invention the control strategy of the simulation model 40 is strictly to emulate the conventional operation of a nuclear reactor, that is, at the beginning, VL (the big valve) is open and VS (the small valve) is half open and the water level is below 18 cm. When the level arrives at 18 cm, the FLC1 starts to work and adjusts VL; when the level arrives at 19.5 cm, the FLC1 stops but FLC2 starts to adjust the VS. The adaptive function is switched on at the beginning and $\alpha$ = 1. Fig. 6 shows a comparison result between the adaptive control in accordance with the present invention and a conventional non-adaptive control with bad rules. The non-adaptive controller is identical to the adaptive controller except the adaptive module is not provided. Adaptive fuzzy control in accordance with the present invention has a much better result than the non-adaptive one. The level controlled by the non-adaptive control hunts around 18 cm, because whenever the water level is higher than 18 cm, the FLC1 will be switched on, but the rules have NL as control commands, consequently the water level will go down. The FLC1 stops immediately when the level is lower than 18 cm and VL will be fully opened. Thus, the water level cannot move from the position around the level of 18 cm, a consequence of the bad rules. The adaptive control can self-regulate the rules, therefore the water level is able to rise to 20 cm. The rules in the adaptive controller change with time. In some aspects, the RBMCS 1 in accordance with the present invention is more difficult to implement for the simulation model 40 than for a nuclear reactor. For example, in a practical experiment the two linear valves VL and VS had an operational delay of 90 seconds. This will result in a inferior control when transiting from the VL controlled by FLC1 to VS controlled by FLC2. The reason is the valve VL still moving when FLC2 is switched on.

In the next example of the present invention, a comparison is made with a conventional fuzzy controller with a good rule base using the simulation model 40 of Fig. 2B. The RBMCS 1 in accordance with the present invention makes use of the same fuzzy rules as the conventional fuzzy controller but includes the adaptive function. Fig. 7 illustrates two effects, in which A has adaptive function and B has not. Comparing them, we have the following result:

- generally A and B are almost the same.

The initial rules are good, it means, they are always right whenever they are required to be positive or negative, therefore, the adaptive function seldom changes any of the rules. Hence, the actions of the controller are almost same for both A and B, and the two curves have almost same shape.

- A is a little faster than B at reaching the desired value but the overshoot of A is bigger than B;

When the water level is near the set value, the rules for B (without the adaptive function) make the level approach the set value gradually, and it is even possible that the water level sometimes stops for an instant $(CE\ (t+1) = 0\ )$, therefore B is a little slower than A to get the set value. It is easy to limit the overshoot of A. The adaptive function does not distinguish between "much lower than the set value" and "a little lower than the set value," for example, when the water level is lower than the set value, even if it is only a little bit lower. Hence, if the water level stops for one step, i.e. then the rule will be adjusted along the positive direction, i.e., $r[i]=\min(r[i]+1\times\alpha$, where this may be 1....7). So some large actions, such as PL or PM, may appear in the modified rule-table, and an overshoot can occur. However, as soon as the water level exceeds the desired value, the adaptive algorithm will use some large negative actions, such as NL or NM to stop the rising of the water level, therefore, the overshoot will never go too far.

• A is more stable than B during a steady-state period.

An objective of the adaptive algorithm in accordance with the present invention is to drive the water level to the desired value by self-regulating rules. Hence, as soon as the water level enters into a steady state, it will be supervised strictly by the adaptive function. In case there is a small disturbance the adaptive function will regulate rules immediately to overcome the influence of the disturbance. The normal fuzzy control is also quite robust in overcoming a disturbance, but the adaptive fuzzy control is more robust. As shown in Fig. 7, when t is around 230 seconds, B is a little lower than the set value 1000, but A is not. On the other hand, the RBMCS in accordance with the present invention uses some crisp rules in an analytic controller, therefore, it is less robust than a pure fuzzy controller. However, the RBMCS method is especially suitable for a well-characterised complex system.

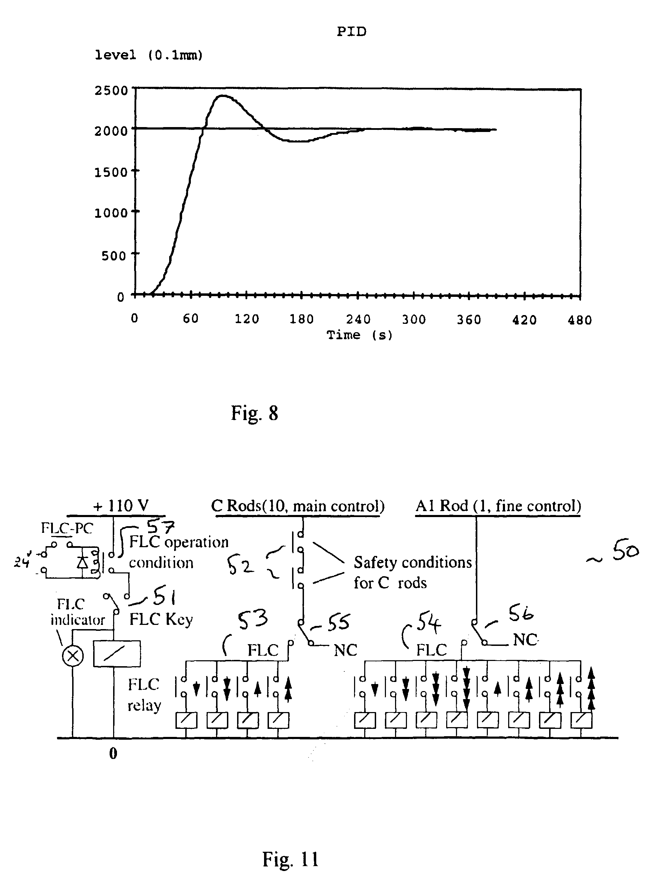

A further comparison is given in Fig. 8 of a conventional PID controller used to control the water level in the main tower of Fig. 2B. The result shows that the PID controller overshoots and undershoots in the general case whereas the trace of a fuzzy controller in accordance with the present invention shown in Fig. 6 shows that the desired value is arrived at more smoothly.

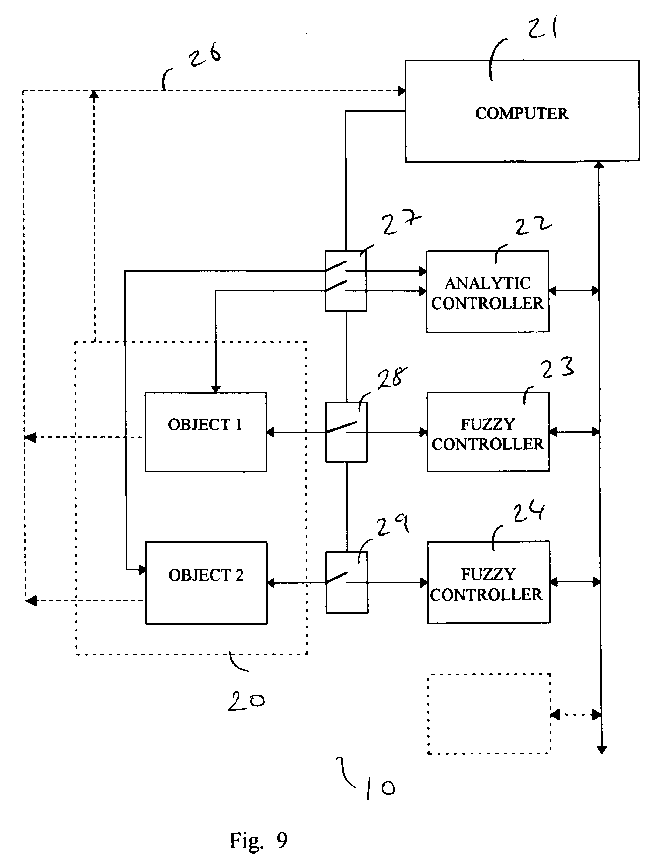

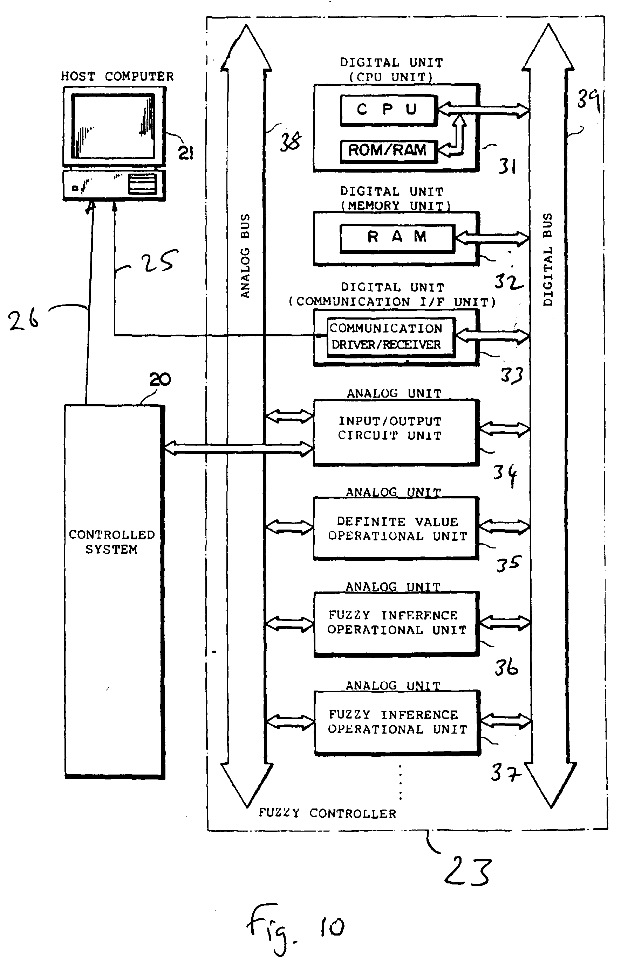

In accordance with a further embodiment of the present invention an RBMCS 10 may be implemented as shown schematically in Figs. 9 and 10. Referring to Fig. 9, the system 10 may include a computer 21 which carries out the functions of the controller organiser 4 and the adaptive module of the previous embodiment, a controlled system 20 such as a nuclear reactor and a plurality of controllers 22-24, which may include an analytical controller 22 and fuzzy controllers 23, 24. Each of the fuzzy controllers 23, 24 preferably controls one object, e.g. either the control rods "A" or the control rods "C" of a nuclear reactor, or one of the valves VL, VS in simulation 40 whereas the analytic controller 22 controls the position of both these rods or valves. All the controllers 22-24 are connected to the computer 21 by a communication line 25 such as an ETHERNET connection or similar. The computer 21 receives control parameter outputs 26 from sensors in the controlled system 20. For example, computer 21 receives a value related to the reactor power in a nuclear reactor or the water level from the main tower 42 in the simulation model 40, as well as the rate of change of this value. Additionally, in some embodiments of the present invention computer 21 may receive other parameters, e.g. values relating to the exact state, e.g. position of object 1 and/or 2. The computer 21 can control each of the controllers 22-24 in such a way that each controller 22-24 can be activated or deactivated. This is indicated by switches 27-29 controlled to be on or off by computer 21 although other implementation methods than these switches 27-29 which achieve the same function are included within the scope of the present invention.

Fig. 10 is a schematic representation of one embodiment of a fuzzy controller 23 in accordance with the present invention. The fuzzy controller 23 has three digital units 31-33 and a number of analog units 34-37. The digital unit 31 is a CPU unit and has a central processing unit (CPU) and memories (not shown) for storing application programs and data, e.g. ROM or RAM memories. The CPU unit 31 is adapted to set various constants and coefficients in the analog units 34-37 as well as for monitoring the operation of the same. Digital unit 32 is a memory having a RAM for storing various data. Digital unit 33 is a communication interface unit for providing communication between the CPU in unit 31 and the computer 21.

The analog unit 34 is an I/O (input/output) unit which acts as a communication interface between the controlled system 20 and the other analog units 35-37. Analog units 36, 37 are fuzzy inference units which each execute a predetermined fuzzy inference operation based an input of a control variable from the system 20 via the I/O unit 34 and a set of fuzzy control rules. Analog unit 35 is a definite value operational unit for defuzzifying the outputs of the analog units 36, 37 and for outputting a definite value synthesised from the outputs of the fuzzy inference units 36, 37. The output from unit 35 is applied to the controlled system 20 via the I/O unit 34. The analog units 34-37 are connected together via an analog bus 38 and the number of units 34-37 may be extended as required.

The analog units 34-37 are connected with the digital units 31-33 via a digital bus 39 thus allowing various constants and other parameters of the analog units 34-37 to be set by the CPU of the CPU unit 31. The function of the controller organiser 4 mentioned above in the first embodiment is carried out by computer 21. The computer 21 monitors the system control parameters 26 and depending upon these values, e.g. whether they lie within the ranges for activating the analytical controller 22 or one of the fuzzy controllers 23, 24, it activates the relevant controllers 22 to 24. For instance, depending upon the history of one of the control parameters 26, the computer 21 sends instructions to the CPU units 31 of the fuzzy controllers 23, 24 to change the fuzzy rules used in the relevant one of the inference units 36, 37 depending on the algorithms mentioned above.

Operation of controllers 22 to 24 will be described below with reference to the simulation model shown in Fig.

2B as a non-limiting example of the present invention. With respect to Figs. 2 and 3 fuzzy controller FLC1 for controlling the valve VS may be controller 23 and FLC2 may be controller 24. The analytic controller 22 is conventional and will not be described in detail. The computer 21 acts as the controller organiser and controls and co-operates with the analytic controller 22 and the fuzzy controllers FLC1 (23) and FLC2 (24) in accordance with the following rules:

1) if D<D_ scope then VL= fully-open and VS= half-open, analytical controller; else if D>-D_ scope then VL= closed and VS= half-open, analytical controller;
2) else if D<Y and D>-Y and DD<W and DD>-W then FLC2 is switched on and FLC1 is off;
3) else FLC1 is switched on and FLC2 is switched off and VS= half closed.
4) if VS= closed and D>Z and DDD>=0 then f = X and VL=VL+f;
5) if VS= open and D<-Z and DDD<=0 then f= -X and VL=VL+f

where D is the difference between the actual value of the control parameter (in the simulation: the height of the water in the main column) and the desired value; DD (speed) is the rate of change of D with time, DDD (acceleration) is the rate of change of DD with time and X represents a valve change value which means a small change in the respective valve setting. D_scope defines an interval in which the FLC1 starts to work which is subject to a property of the system, e.g., D_scope = -7.5 cm for the simulation model. The first rule means that if the water level in the main tower is more than 7.5 cm below the desired value, VL will be fully opened and VS is at the half-open position and the system 20 is controlled by the analytic controller 22, and if the water level in the main tower is more than 7.5 cm above the desired value, VL will be fully closed and VS is half-open and the system 20 is controlled by the analytic controller 22 (coarse control). The second rule means that when D and DD lie within a very small region ($\pm$ Y and $\pm$ W, respectively, e.g. 2 cm), then VL doesn't move (actually FLC1 doesn't work) and FLC2 starts to work (very fine control). The third rule means that in other cases FLC1 starts to work and FLC2 stops (fine control). Whenever FLC1 starts to work, VS is always set back to the middle position, i.e. half-open. The last two rules represent the situation when VS is at a limit position. When VS has been already closed and the water level is higher than the desired value by an amount Z, e.g. 0.2 cm, and it is still rising, then VL should be closed a little bit more by an amount X. When VS has been already fully opened and the water level is lower than the desired value and it is still descending, then VL should be opened a little bit more by a value X.

In the RBMCS 10 for the simulation model 40, the fuzzy logic controllers FLC1 and FLC2 may be designed as a function, so these can be generated by the same function:

*Fuzzy_control(rule base, input1, input2)*

where the arguments are the rule base, input1, and input2. Each fuzzy controller FLC1 and FLC2 has two inputs, i.e., D and DD, and one output *f* which represents an added value to the current value of VL or VS, respectively. D, DD and *f* are fuzzified and are described individually by 7 fuzzy linguistic terms, that is, PL (positive large), PM (positive middle), PS (positive small), ZE (Zero), NS (negative small), NM (negative middle), and NL (negative large). The membership functions for these fuzzy linguistic terms may be defined as symmetrical triangle-shaped functions, for example, but they may be limited in different intervals which are represented as [*lx, rx*]. The following is the mathematical description of the membership functions, where i=1, 2, 3, 4, 5, 6, 7, which correspond to NL, NM, NS, ZE, PS, PM, PL, respectively, and a=(*rx-lx*)/8.

$$mf(lx,rx,i,xx) = \begin{cases} \begin{cases} 1 & xx \le lx+a \\ -\dfrac{xx-lx-2a}{a} & lx+a < xx < lx+2a \quad i=1 \\ 0 & else \end{cases} \\[2em] \begin{cases} \dfrac{xx-lx-(i-1)a}{a} & lx+(i-1)a < xx \le lx+ia \\ -\dfrac{xx-lx-(i+1)a}{a} & lx+ia < xx \le lx+(i+1)a \quad 1 < i < 7 \\ 0 & else \end{cases} \\[2em] \begin{cases} 1 & xx \ge rx-a \\ \dfrac{xx-rx+2a}{a} & rx-2a < xx < rx-a \quad i=7 \\ 0 & else \end{cases} \end{cases}$$

For example, suppose $lx = -200$, $rx = 200$, $i=4$, $xx = 0$, then $mf(-200, 200, 4, 0) = 1$, it means the membership degree that $xx = 0$ belongs to the fuzzy set ZE is 1.

In one embodiment each fuzzy controller FLC1, FLC2 has one rule base which contains 49 fuzzy control rules. The $i$-th rule can be represented as the following form:

**if D is A$_i$ and DD is B$_i$, then $f$ is C$_i$**

where (A$_i$, B$_i$, and C$_i$ are fuzzy linguistic values, such as NL, PS, and so on. The above rule may be abbreviated as (A$_i$, B$_i$: C$_i$). According to the reasoning model of Mamdani, the following formulas are used to calculate the output of a fuzzy controller FLC1, FLC2,

$$\lambda_1 = \bigvee_{C_i = NL} (A_i(d) \wedge B_i(dd))$$

$$\lambda_2 = \bigvee_{C_i = NM} (A_i(d) \wedge B_i(dd))$$

$$\lambda_3 = \bigvee_{C_i = NS} (A_i(d) \wedge B_i(dd))$$

$$\lambda_4 = \bigvee_{C_i = ZE} (A_i(d) \wedge B_i(dd))$$

$$\lambda_5 = \bigvee_{C_i = PS} (A_i(d) \wedge B_i(dd))$$

$$\lambda_6 = \bigvee_{C_i = PM} (A_i(d) \wedge B_i(dd))$$

$$\lambda_7 = \bigvee_{C_i = PL} (A_i(d) \wedge B_i(dd))$$

Suppose the output interval of $f$ is [$nf, pf$] , then

$$f = \frac{\sum_{i=1}^{7} (nf + i\frac{pf - nf}{8})\lambda_i}{\sum_{i=1}^{7} \lambda_i} \tag{1}$$

Normally, when the water level rises from 0 to 20 cm, three control stages will develop. The first stage is from a water level of 0 to 12.5 cm (20 - 7.5 cm) in the main tower 42. The computer 21 receives the water level sensor output 26 and activates via switch 27 the analytic controller 22 which is the only controller which works. In the second stage the water level in the main tower 42 is between 12.5 cm to 18 cm and computer 21 activates only FLC1 via switch 28. In the third stage the water level is from 18 cm to 20 cm (up to 22 cm) and computer 21 activates FLC2 via switch 29.

In accordance with the present invention the rules in the fuzzy controllers FLC1, FLC2 are modified depending upon the performance of the system 20, i.e. in accordance with performance norms and rule modification algorithms of the present invention as described above. Calculation of performance values may be carried out in computer 21, e.g. by appropriate computer programs running thereon. Calculation of the modifications necessary to the fuzzy rules of the fuzzy controllers FLC1 and FLC2 may be done by the computer 21 and the modified rules communicated to the fuzzy controllers FLC1 and FLC2 via communication line 25. Alternatively, each fuzzy controller FLC1 and FLC2 may have its own local intelligence to calculate the modified fuzzy rules applicable to itself. The input of each controller FLC1 and FLC2 as well as the analytical controller would then be $E$ and $CE$ as well as any additional variables such as the position of the object controlled by the controller.

Preferably not all rules need to be adaptively modified which could be modified. Preferably rule $i$ may be adaptively regulated in accordance with an embodiment of the present invention if and only if:

$$A_i\,(E) \wedge B_i\,(CE)\; =\; \bigvee_{C_j = C_i}\; A_j\,(E) \wedge B_j\,(CE) \qquad (2)$$

Normally, there are at most four rules which are activated at the same time in a two-input-one-output fuzzy controller, however in accordance with the present invention those rules are modified which are the most influential and not necessarily all four. Hence, the computer 21 not only determines the degree of adaptive modification of each rule for each fuzzy controller FLC1 and FLC2 but also determines which of these rules are to be selected for modification. For example, if two rules are activated simultaneously which have the same fuzzy linguistic value in the conclusion part before modification, only the one with the bigger output of membership degree is influential, see equation (2). Therefore, it is not necessary to adjust all activated rules. In particular, modifying too many rules at one time may cause oscillation of rules and erratic control performance.

An algorithm of adaptively regulating fuzzy rules in accordance with one embodiment of the present invention may be simply expressed as the following:

- each fuzzy controller uses its current fuzzy control rule table to infer (control) once at time $t$, stores $E(t)$ and gets $E(t+1)$ and $CE(t+1)$ once the system progresses to the new state at $t+1$;
- find out the rule $i(s)$ which should be adjusted;
- modify the rule $i(s)$ according to the performance measurement norms described above;
- keep the special rule (ZE,ZE;ZE), i.e., "if $E$ is ZE and $CE$ is ZE, then $f$ is ZE."
- return to the first step and repeat.

This is a dynamic process which cycles endlessly. According to the above norms, the duty of this adaptive algorithm is to adjust rules so that the actual value will approach the desired value. Therefore, this adaptive algorithm will make $E$ equal to zero gradually.

If initial overshoots should be avoided, the safest way is to initialise all rules of each fuzzy controller FLC1 and FLC2 as having a unified conservative (safe) output, e.g. NL, as shown in Table 1.

Table 1

| The initial rule table for both FLC1 and FLC2 | | | | | | |
|---|---|---|---|---|---|---|
| DD\D | NL | NM | NS | ZE | PS | PM | PL |
| NL | NL | NL | NL | NL | NL | NL | NL |
| NM | NL | NL | NL | NL | NL | NL | NL |
| NS | NL | NL | NL | NL | NL | NL | NL |
| ZE | NL | NL | NL | NL | NL | NL | NL |
| PS | NL | NL | NL | NL | NL | NL | NL |
| PM | NL | NL | NL | NL | NL | NL | NL |
| PL | NL | NL | NL | NL | NL | NL | NL |

In this table, for example, NL at row 2 and column 3 means; if D (difference between actual and desired value of the control parameter) is NM and DD is NL then f (the output of the controller) is NL. All rules have the same conclusion part though condition parts are different. After a certain period of time the rules of the fuzzy controllers FLC1 and FLC2 have changed, they have been adapted to the system conditions. For example, in the above example 10 minutes later, the rule tables have both changed. Table 2 gives the modified rules of FLC1 and Table 3 gives those for FLC2, where the modified rules are marked by bold fonts.

Table 2

| The regulated rule table for both FLC1 | | | | | | | |
|---|---|---|---|---|---|---|---|
| DD\D | NL | NM | NS | ZE | PS | PM | PL |
| NL | NL | NL | NL | NL | NL | NL | NL |
| NM | **NM** | NL | NL | NL | NL | NL | NL |
| NS | NL | **NS** | **PM** | NL | NL | NL | NL |
| ZE | **NS** | **PL** | **PL** | **ZE** | NL | NL | NL |
| PS | NL | NL | **NM** | NL | NL | NL | NL |
| PM | NL | NL | NL | NL | NL | NL | NL |
| PL | NL | NL | NL | NL | NL | NL | NL |

Table 3

| The regulated rule table for FLC2 | | | | | | | |
|---|---|---|---|---|---|---|---|
| DD\D | NL | NM | NS | ZE | PS | PM | PL |
| NL | **NM** | **PM** | **PL** | **PL** | **NM** | NL | NL |
| NM | **PL** | **PL** | **PM** | **PL** | **PL** | NL | NL |
| NS | **PM** | **PL** | **PL** | **PS** | **PL** | NL | NL |
| ZE | **PL** | **PL** | **PS** | **ZE** | NL | NL | NL |
| PS | **PL** | **PL** | **PM** | **NS** | NL | NL | NL |
| PM | **PM** | **PL** | **PL** | **NM** | NL | NL | NL |
| PL | **ZE** | **ZE** | **NM** | NL | NL | NL | NL |

The adaptive algorithm in accordance with the present invention is helpful to revise any bad rules. The adaptive algorithm is a general algorithm which is independent of the specific system.

Certain aspects of the present invention may be summarised as:

- The norms introduced in this invention are very simple, for example, norms consider $P(t)<0$ but not more complex algorithms, for instance, $P(t)<-1$ or $P(t)<-2$ but such more complex algorithms are not excluded from the present invention.
- The adaptive function is generic and system independent.
- The parameter $\alpha$ is influential to the overshoot and response time (rise time). When $\alpha$ is too large, there will possibly be a big overshot; when $\alpha$ is too small, there will possibly be a long response time.
- The adaptive function considers only the last value, that is, use $P(t-1)$ not $P(t-\tau)$ ($\tau$ is a longer delay) to decide $P(t)$, but the experimental results shows that the control is good, although the valves of the simulation model have a delay of maximum 90 seconds. The present invention does not exclude more complex algorithms in which more historical data is used to determine the best rule modifications.
- The adaptive function chooses some rules according to formula (1) to adjust some but not all activated rules. This makes the transition of the rules smoother with little or no resonance.
- Selecting initial rules appropriately will benefit the control effect. For example, if the overshot is strictly limited, all rules may be initialised with the conclusion part of NL, as described above. If some experience is available, this may be included in the determination of the initial rules of the adaptive function and the response time (rise time) will be shorter.
- The rule, if $E$ is ZE and $CE$ is ZE then $f$ is ZE, should be fixed, as it will help the system become stable.

- The adaptive function is very helpful in keeping the system stable in a steady state. It may not be able to guarantee no overshot if the initial rules are randomly selected.
- The adaptive function need not adjust membership functions and scale factors but the present invention does not exclude these additional adaptive elements.

A further embodiment of the present invention will be described with reference to Fig. 11. Generally, a nuclear reactor will be operated by hand and will have an optional automatic control. The rules for when the automatic control may be used are well known and documented. In accordance with this embodiment one or more fuzzy controllers FLC 53, 54 or any other form of new controller is (are) to be used with the reactor control system 50. In particular the fuzzy controller FLC of this embodiment may be one of the above embodiments of the invention which includes an analytic controller and one or more fuzzy controllers, whereby the fuzzy controllers control the system when the actual value of the control parameter, e.g. reactor power, is close to the desired value whereas the analytic controller is used when the actual value is far from the desired value. This is advantageous for both steady state and load change conditions. Load changes are normally much larger than load disturbances. Hence, in accordance with the present invention control passes to the analytic controller during a load change (large difference between actual and desired value) or even reverts to normal control if the difference between actual and desired values are outside the safety zone for this automatic control. To avoid the conventional forms of control being operative at the same time as the FLC controller 53, 54 a key and safety lock 51 are provided. When this lock 51 is activated by the key switches 55, 56 change the control from conventional to the new controllers. As an additional precaution, the power supply to the computer of the FLC controllers is only activatable when the switch 57 is closed which is also activated by the key 51. The controller 53 for the C rods is subject to the usual safety conditions (switches 52) for C rod operation. When the key 51 is deactivated the control returns to normal operation.

While the invention has been shown and described with reference to preferred embodiments, it will be understood by those skilled in the art that various changes or modifications in form and detail may be made without departing from the scope and spirit of this invention as defined in the attached claims.

## Claims

1.  A fuzzy controller for use with a controlled system and for controlling a first object of the controlled system in accordance with a system control parameter; the fuzzy controller comprising:

    a fuzzy rule base including control rules for performing a fuzzy inference operation; and an adaptive unit for adaptively changing a parameter relating to one of the control rules of the fuzzy controller in accordance with a multi-dimensional performance table having at least three dimensions, the inputs for the table being an error in the system control parameter, the rate of the change of the error in the system control parameter and a value related to a state of the controlled system or a value related to a state of an object in the controlled system.

2.  A fuzzy controller for use with a system having a sensor for sensing a state of the controlled system and for controlling a first object of the controlled system, the fuzzy controller comprising:

    a fuzzy rule base including control rules for performing a fuzzy inference operation; and an adaptive unit for adaptively changing a parameter relating to one of the control rules of the fuzzy controller, the adaptive unit being adapted to change the parameter relating to one of the control rules in a current time period in accordance with a value relating to the current output value of the sensor and a value relating to the output value of the sensor in a previous time period.

3.  A fuzzy conttroller according to clam 1 or 2, wherein only a rule of the fuzzy rule base is changed if it is the largest amongst those activated rules which have the same conclusion part.

4.  A fuzzy controller accoprding to any previous claim, wherein the fuzzy rule base includes a rule that if an error between the actual and desired performance of the the system and the rate of the change of this error is close to zero, the fuzzy controller has a neutral control output and that this rule cannot be changed.

5.  A method of controlling a system including at least one fuzzy controller having control rules for performing a fuzzy inference operation, the at least one fuzzy controller controlling a first object of the controlled system in accordance with a sensed system state of the controlled system, comprising the steps of:

    adaptively changing a parameter relating to one of the fuzzy rules of the at least one fuzzy controller in a current time period in accordance with a current value relating to a sensed system state and a value relating to a sensed system state in a previous time period.

6. A method of controlling a system including at least one fuzzy controller having control rules for performing a fuzzy inference operation, the at least one fuzzy controller controlling a first object of the controlled system in accordance with a sensed system state of the controlled system, comprising the steps of:

adaptively changing a parameter relating to one of the fuzzy rules of the at least one fuzzy controller in accordance with a multi-dimensional performance table having at least three dimensions, the inputs for the table being an error value for the sensed system state, a rate of change of this error and a value related to a state of the controlled system or a value related to a state of an object in the controlled system.

7. A control system for a group of controllers comprising:

at least one fuzzy controller having control rules for performing a fuzzy inference operation, said fuzzy controller controlling a first object of a system to be controlled in accordance with a control parameter;

at least one analytic controller for controlling the first object of the controlled system;

a control means for controlling which of the at least one analytic and the at least one fuzzy controllers actively controls the controlled system; and

an adaptive unit for adaptively changing a parameter relating to one of the fuzzy rules of the at least one fuzzy controller in response to changes in the control parameter.

8. A method of operating a group of controllers at least one fuzzy controller having control rules for performing a fuzzy inference operation, said fuzzy controller controlling a first object of a system to be controlled in accordance with a control parameter and at least one analytic controller for controlling the first object of the controlled system; the method comprising the following steps:

controlling which of the at least one analytic and the at least one fuzzy controllers actively controls the controlled system; and
adaptively changing a parameter relating to one of the fuzzy rules of the at least one fuzzy controller in response to changes in the control parameter when the fuzzy controller is actively controlling the controlled system.

9. A simulation system for well characterised safety critical systems comprising a first

hollow vessel, a second hollow vessel and a third hollow vessel;
a supply of liquid to each of the second and third hollow vessels;
an output for the liquid from each of the second and third vessels to the first vessel; a liquid outlet from the first vessel;
a first controllable valve for controlling the flow of liquid from the second to the first vessel; and
a second controllable valve for controlling the flow of liquid from the third to the first vessel.

10. A system for controlling a safety critical system, the safety critical system having two automatic control devices, the control system comprising:

a safety lock, the safety lock allowing the system to be controlled by only one of the automatic controllers at any one time.

11. A system according to claim 8, wherein one of the automatic controllers is a controller according to any of claims 1 to 4 ot a control system according to claim 7.

Fig. 1

C-rods (main-tuning)  A-rod
(fine-tuning)

BR1

Moving rods to control the power level

Fig. 2A

Fig. 2B

Fig. 3

power

Fig. 4

$r[i]$: the action of the $i$-th rule, $r[i]$=1, 2, ..., 7.

$\alpha$ : the adjustment step, $\alpha$=1, 2, ..., 6.

$r[i] = r[i] - \alpha$

$r[i] = r[i]$

$r[i] = r[i] + \alpha$

norm for
feature part (1)

Fig. 5

level(cm)

Fig. 6

Fig. 7

PID

level (0.1mm)

Fig. 8

Fig. 11

Fig. 9

HOST COMPUTER

21

25

26

20

CONTROLLED
SYSTEM

38

ANALOG BUS

DIGITAL UNIT
(CPU UNIT)

C P U

ROM/RAM

39

31

DIGITAL UNIT
(MEMORY UNIT)

R A M

32

DIGITAL UNIT
(COMMUNICATION I/F UNIT)

COMMUNICATION
DRIVER/RECEIVER

33

ANALOG UNIT

INPUT/OUTPUT
CIRCUIT UNIT

34

ANALOG UNIT

DEFINITE VALUE
OPERATIONAL UNIT

35

ANALOG UNIT

FUZZY INFERENCE
OPERATIONAL UNIT

36

ANALOG UNIT

FUZZY INFERENCE
OPERATIONAL UNIT

37

DIGITAL BUS

FUZZY CONTROLLER

23

Fig. 10

**European Patent Office**

## EUROPEAN SEARCH REPORT

**Application Number**

EP 98 87 0192

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE 42 40 788 A (BODENSEEWERK GERAETETECH) 9 June 1994 <br> * the whole document * <br> --- | 1,6 | G05B13/02 |
| Y | CHIH-HSUN CHOU ET AL: "A HEURISTIC SELF-TUNING FUZZY CONTROLLER" FUZZY SETS AND SYSTEMS, vol. 61, no. 3, 10 February 1994, pages 249-264, XP000423101 <br> * the whole document * <br> --- | 1,6 | |
| A | US 5 481 648 A (VOLPONI ALLAN J ET AL) 2 January 1996 <br> * column 4, line 44 - column 11, line 14 * <br> --- | 1 | |
| A | BONISSONE P P ET AL: "FUZZY LOGIC CONTROLLERS: FROM DEVELOPMENT TO DEPLOYMENT" PROCEEDINGS OF THE INTERNATIONAL CONFERENCE ON NEURAL NETWORKS (ICN, SAN FRANCISCO, MAR. 28 - APR. 1, 1993, vol. 2, 28 March 1993, pages 610-619, XP000369430 INSTITUTE OF ELECTRICAL AND ELECTRONICS ENGINEERS <br> --- | 1 | TECHNICAL FIELDS SEARCHED (Int.Cl.6) <br><br> G05B |
| A | BINDEL T ET AL: "ENTWURF, STABILITATSANALYSE UND ERPORBUNG VON FUZZY-REGLERN AM BEISPIEL EINER DURCHFLUSSREGELUNG DESIGN, STABILITY ANALYSIS AND TEST OF FUZZY CONTROLLERS FOR A FLOW CONTROL SYSTEM" AUTOMATISIERUNGSTECHNIK - AT, vol. 43, no. 5, 1 May 1995, pages 249-255, XP000507699 <br> --- <br> -/-- | 1 | |

~~The present search report has been drawn up for all claims~~

| Place of search | Date of completion of the search | Examiner |
|---|---|---|
| THE HAGUE | 1 February 1999 | KELPERIS K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent Office | EUROPEAN SEARCH REPORT | Application Number |
|---|---|---|---|
| | | | EP 98 87 0192 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 433 079 A (BADAMI VIVEK V ET AL) 18 July 1995 * the whole document * --- | 1 | |
| A | F.MRAD ET AL: "A NOVEL FUZZY LOGIC SYNCHRONOUS MACHINE STABILIZER" IAS97 CONFERENCE RECORD OF THE 1997 IEEE INDUSTRY APPLICATIONS, vol. 2, 5 October 1997, pages 797-803, XP002091778 USA * the whole document * ----- | 1 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 1 February 1999 | KELPERIS K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 98 87 0192

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1 , 3 - 4 , 6

**European Patent Office**

**LACK OF UNITY OF INVENTION**
**SHEET B**

Application Number

EP 98 87 0192

The Search Division considers that the present European patent application does not comply with the requirements of unity of invention and relates to several inventions or groups of inventions, namely:

1. Claims: 1 3-4 6

    A fuzzy logic controller using a multidimansional table

2. Claim : 2 5

    A fuzzy controller using a value of a sensor related to a previous time period

3. Claims: 7-8 11

    A method of controlling using a fuzzy and an analytic controller

4. Claim : 9

    A simulation method

5. Claim : 10

    A system for controlling a safety critical system

EP 0 985 988 A1

## ANNEX TO THE EUROPEAN SEARCH REPORT
## ON EUROPEAN PATENT APPLICATION NO.

EP 98 87 0192

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-1999

| Patent document cited in search report | | Publication date | Patent family member(s) | Publication date |
|---|---|---|---|---|
| DE 4240788 | A | 09-06-1994 | NONE | |
| US 5481648 | A | 02-01-1996 | NONE | |
| US 5433079 | A | 18-07-1995 | NONE | |

EPO FORM P0459

For more details about this annex : see Official Journal of the European Patent Office, No. 12/82